# EUROPÄISCHE PATENTANMELDUNG

(11) **EP 0 863 353 A2**
(43) Veröffentlichungstag der Anmeldung: **09.09.1998**
(21) Anmeldenummer: 98810179.6
(22) Anmeldetag: 03.03.1998
(51) Int. Cl.: F16L 13/14

(54) **Verankerungsvorrichtung**

(30) Priorität: 03.03.1997 CH 497/97
(71) Anmelder: Erb, Anton H., 2012 Auvernier (CH)
(72) Erfinder: Erb, Anton H., 2012 Auvernier (CH)
(74) Vertreter: Roshardt, Werner Alfred, Dipl.-Phys.

(57) **Zusammenfassung**

Eine Verankerungsvorrichtung zum Abstützen einer Abdeckplatte (4) in einem Abstand zu einem statisch tragfähigen Baukörper (1) hat ein Ankerelement (8) mit einem Verankerungsabschnitt (9) zum Verankern im Baukörper (1) und mit einem Kopf (11) zur Fixierung der Abdeckplatte (4). Der Kopf (11) hat einen gegenüber einem benachbarten Schulterbereich (10) reduzierten Querschnitt. Durch einen Längskanal (14), welcher sich vorzugsweise durch das ganze Ankerelement (8) erstreckt, kann eine Zementmasse eingespritzt werden. Das Einspritzen erfolgt in zwei Teilschritten, wobei im ersten Teilschritt - in welchem sich der Adapter (18) in einer ersten Stellung befindet, in welcher die Ausgänge (16) versperrt sind - das zum Einzementieren des Verankerungsabschnittes (9) erforderliche Volumen der Mörtelmasse eingespritzt wird, und im zweiten Teilschritt - in welchem sich der Adapter (18) in einer zweiten Stellung befindet, in welcher die Ausgänge (16) offen sind - das zum Einzementieren des Kopfes (11) erforderliche Volumen der Mörtelmasse eingespritzt wird.

## Beschreibung

### Technisches Gebiet

Die Erfindung betrifft eine Verankerungsvorrichtung zum Abstützen einer Abdeckplatte in einem Abstand zu einem statisch tragfähigen Baukörper, ein Verfahren zum Verankern einer Abdeckplatte und eine Gebäudefassade, bei welcher Abdeckplatten in einem gegebenen Abstand zum Baukörper gehalten sind.

### Stand der Technik

Grössere Gebäude wurden in der Vergangenheit und werden auch heute noch häufig mit Gesteinsfassadenplatten verkleidet. Dadurch wird nicht nur eine Verschönerung, sondern auch ein Wetterschutz der Gebäudeaussenwand erreicht.

Die Fassadenplatten sind dabei in einem gewissem Abstand zur abgedeckten Wand montiert, so dass dazwischen Luft zirkulieren kann. Das Gewicht der Platten wird durch Schräganker vom Baukörper gehalten. Zur Wahrung des gewünschten Abstands können z. B. diverse kleine Abstandshalter vorgesehen sein.

Es hat sich nun gezeigt, dass Fassadenplattenbefestigungen mit den Jahrzehnten altern und anfangen nachzugeben. Dies führt dazu, dass die Fassadenplatten sich unkontrolliert absenken. Wenn eine Platte auf einer anderen aufzuliegen beginnt, kann das zu einer Überlastung der bestehenden Befestigungen und im schlimmsten Fall zu deren Bruch führen. Es ist deshalb unerlässlich, dass solche Plattenbewegungen unterbunden bzw. gestoppt werden können.

### Darstellung der Erfindung

Aufgabe der Erfindung ist es nun, eine Verankerungsvorrichtung zu schaffen, welche die Sanierung von bestehenden Gebäudefassaden mit möglichst geringen Kosten erlaubt.

Die Lösung der Aufgabe ist durch die Merkmale des Anspruchs 1 definiert. Gemäss der Erfindung ist zum Abstützen von Abdeckplatten ein stabförmiges Ankerelement mit einem Verankerungsabschnitt und einem Kopf vorgesehen. Der Verankerungsabschnitt dient zum Verankern des genannten Elements im Baukörper und der Kopf zur Fixierung der Abdeckplatte. In axialer Richtung an den Kopf anschliessend ist ein Schulterbereich ausgebildet. Der Kopf hat einen gegenüber dem Schulterbereich verjüngten (d. h. reduzierten) Querschnitt.

Mit dem erfindungsgemässen Ankerelement ist es möglich, Fassaden zu sanieren, ohne die Abdeckplatten zu entfernen. Dazu werden einfach an den gewünschten Stellen von aussen Bohrungen erstellt, die sich durch die Abdeckplatten hindurch und in den Baukörper hinein erstrecken. Der Durchmesser der Bohrungen ist dabei an den Querschnitt im Schulterbereich des Elements angepasst. D. h. der Schulterbereich stellt die korrekte Position des stabförmigen Elements quer zur Längsachse der Bohrung sicher. Das Ankerelement kann nun von aussen in die Bohrungen gesteckt und durch Einspritzen eines Mörtels (chemischer Mörtel oder Zementmörtel) tragfähig verankert bzw. fixiert werden. Die Verjüngung im Bereich des Kopfes führt dazu, dass um diesen herum ein Freiraum entsteht, welcher ausgemörtelt werden kann.

Vorzugsweise ist im Kopf ein stirnseitig mündender Längskanal vorgesehen, welcher im Bereich des Kopfes, vorzugsweise am Übergang zwischen Kopf und Schulterbereich, radiale Ausgänge hat. Wenn durch den Längskanal eine fliessfähige Mörtelmasse eingespritzt wird, tritt sie durch die radialen Ausgänge in den zu füllenden ringförmigen Freiraum (welcher in der Bohrung der Abdeckplatte um den Kopf herum gebildet ist). Die Mörtelmasse kann also durch das Ankerelement hindurch (gleichsam von hinten) in den Freiraum eingespritzt werden. Dies hat nicht zuletzt den Vorteil, dass die Entstehung von Lufteinschlüssen von vornherein verhindert bzw. minimiert werden kann. Alternativ ist auch denkbar, dass der Freiraum der Bohrung der Abdeckplatte direkt von aussen ausgespritzt wird.

Mit Vorteil erstreckt sich der Längskanal von vorne bis in den Verankerungsbereich, namentlich bis zum hinteren Ende. Dort können radiale Mündungen vorgesehen sein. Wenn sich der Längskanal über die ganze Länge des Ankerelements erstreckt und am hinteren Ende stirnseitig mündet, kann auf die radialen Mündungen auch verzichtet werden. Die fliessfähige Mörtelmasse kann folglich durch das Ankerelement hindurch in die Bohrung des Baukörpers eingespritzt werden.

Es ist aber durchaus auch möglich, zuerst die Bohrung des Baukörpers mit einer Zementmasse auszufüllen und dann erst das Ankerelement in die noch weiche Masse hineinzuschieben.

Der Schulterbereich befindet sich zwischen Verankerungsabschnitt und Kopf (was allerdings nicht zwingend ist). Er hat eine Länge, die grösser ist als der Abstand zwischen Abdeckplatte und Baukörper und wird so montiert, dass das eine Ende des Schulterbereiches in der Bohrung des Baukörpers und das andere in der Bohrung der Abdeckplatte steckt. Die beiden genannten Bohrungen werden also durch den Schulterbereich gegen den Zwischenraum (zwischen Abdeckplatte und Baukörper) mehr oder weniger dicht abgeschlossen.

Der Schulterbereich kann auch kürzer sein bzw. so montiert werden, dass er nicht von hinten in die Bohrung der Abdeckplatte hineinragt. Es können auch mehrere Schulterbereiche vorhanden sein. Insbesondere ist denkbar, dass der bzw. ein Schulterbereich am vorderen Ende des Kopfes angeordnet ist.

In der Regel läuft der Schulterbereich rund um das Ankerelement herum. Dies ist allerdings nicht zwingend. Die Justierung senkrecht zur Längsachse kann nämlich auch mit mehreren Längsrippen erreicht werden.

Gemäss einer besonders bevorzugten Ausführungsform verfügt der Längskanal kopfseitig über eine Anschlusskonstruktion für einen Adapter, welcher zum Einspritzen der Mörtelmasse eingesetzt werden kann. Die genannten Mittel sind dabei so ausgeführt, dass der Adapter zumindest in zwei verschiedenen axialen Positionen angeordnet sein kann. In der ersten Position werden die radialen Ausgänge des Kopfbereiches versperrt, so dass die eingespritzte Mörtelmasse bis ans hintere Ende des Längskanals vordringen muss, bevor sie nach aussen dringen kann. In der zweiten Position werden die radialen Ausgänge im Kopfbereich nicht abgedeckt, so dass die Mörtelmasse hier nach aussen dringen kann, um den Kopf in der Bohrung der Abdeckplatte einzuzementieren.

Die genannte Anschlusskonstruktion kann durch ein Schraubgewinde, einen mehrstufigen Bajonettverschluss oder in anderer Weise verwirklicht werden.

Am Übergang zwischen Kopf und Schulterbereich kann eine flexible Auffanghülle vorgesehen sein. Sie ist so am Ankerelement angebracht, dass sie bei der Montage mindestens teilweise ausserhalb der Bohrung der Abdeckplatte liegt (und zwar im Zwischenraum zwischen Abdeckplatte und Baukörper). Wenn die Mörtelmasse im Kopfbereich aus den radialen Ausgängen austritt, füllt sie u. a. auch diese aus und bläht sie zu einem Kragen auf. Im erhärteten Zustand ergibt sich so eine formstabile Abstützung zur Sicherung des vorgegebenen Abstandes zwischen Abdeckplatte und Baukörper.

Das Ankerelement ist mit Vorteil als einteiliger, rohrförmiger Dorn aus rostfreiem Stahl ausgebildet. Der Adapter selber kann im wesentlichen ein Rohrstück mit einem Aussengewinde (bzw. einer geeigneten Anschlusskonstruktion) zum Einsetzen in das kopfseitige Ende des Längskanals sein.

Ein weiterer Bestandteil der Verankerungsvorrichtung kann eine Montagehilfe, namentlich eine Montageplatte sein, welche aussen auf den Adapter aufgesetzt und (z. B. mit Spreizkeilen) auf der Abdeckplatte fixiert werden kann. Auf diese Weise kann das Ankerelement vor und während dem Einspritzen der Mörtelmasse in den Bohrungen des Baukörpers und der Abdeckplatte festgehalten werden.

Zur Erleichterung der positionsgenauen Befestigung des Ankerelements in den Bohrungen kann der Adapter mit der Montagehilfe justierbar verbunden sein. Insbesondere sollte eine Justierung in Achsenlängsrichtung der Bohrungen möglich sein. Dies lässt sich z. B. mit einem einfachen Gewinde erreichen.

Um eine vorgegebene Abdeckplatte in einem ebenfalls vorgegebenen Abstand zu einem Baukörper zu verankern, wird im Sinne der Erfindung wie folgt vorgegangen:

Zuerst wird an einer ausgewählten Stelle von aussen eine Bohrung angebracht, welche durch die Abdeckplatte hindurch und in den Baukörper hinein geht. Der Durchmesser der Bohrung ist dabei so bemessen, dass der Schulterbereich des Ankerelements gerade noch hineinpasst.

Dann wird das Ankerelement mit Hilfe der Montageplatte in der Bohrung positioniert und fixiert. Der Verankerungsabschnitt steckt dann im Baukörper und der Kopf in der Bohrung der Abdeckplatte.

Via Adapter wird nun Mörtelmasse in den Längskanal eingespritzt, wobei sowohl die Bohrung des Baukörpers als auch diejenige der Abdeckplatte aufgefüllt wird. Wenn die Mörtelmasse erhärtet ist, ist die Verankerung im wesentlichen fertig.

Wenn der Adapter gemäss einer bevorzugten Ausführungsform in zwei verschiedene Positionen gebracht werden kann, dann erfolgt das Einspritzen der Mörtelmasse in zwei Teilschritten:

Im ersten Teilschritt befindet sich der Adapter in einer Stellung, in welcher die kopfseitigen radialen Ausgänge versperrt sind, so dass nur die Bohrung des Baukörpers ausgespritzt wird.

Im zweiten Teilschritt wird der Adapter dann in die zweite Position gebracht, in welcher die radialen Ausgänge im Kopfbereich offen sind, so dass die Bohrung der Abdeckplatte ausgespritzt wird.

Die erfindungsgemässe Verankerungsvorrichtung wird insbesondere zur Sanierung von Gebäudefassaden mit im Abstand zum Baukörper aufgehängten Gesteinsplatten eingesetzt. Denkbar sind aber auch Anwendungen im Tunnelbereich oder überall dort, wo Platten im Abstand zu einem tragenden Element aufgehängt sind bzw. werden sollen.

Optimalerweise werden nur gerade zwei Ankerelemente pro Platte angebracht. Diese werden mit Vorteil möglichst in der Mitte (der Plattenfläche) und nahe nebeneinander plaziert (z. B. in einen Abstand von 1 m). Auf diese Weise kann der Einfluss von divergierenden thermischen Ausdehnungen von Platte und Baukörper minimiert werden.

Es versteht sich von selbst, dass die mechanische Belastbarkeit der Ankerelemente relativ gross sein muss, wenn eine Fassadenplatte (mit einer Fläche von z. B. 2 x 3 m²) an nur gerade zwei Stellen verankert werden soll. Ebenso ist klar, dass die ausgewählten Verankerungsstellen baustatisch gut belastbar sein müssen. Um nun eine Fassadenplatte mit nur gerade zwei Verankerungen sanieren zu können, werden im Rahmen der Erfindung die Bohrungen jeweils im Bereich einer Betondecke des Gebäudes angebracht.

Aus der nachfolgenden Detail beschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen:
- Fig. 1: einen schematischen Längsschnitt einer Verankerungsvorrichtung im Montagezustand vor dem Einspritzen der Mörtelmasse;
- Fig. 2: einen schematischen Längsschnitt einer alternativen Verankerungsvorrichtung mit Mitteln zur Bildung eines Kragens;
- Fig. 3: eine schematische Darstellung der Verankerungsvorrichtung gemäss Fig. 2 nach dem Erstellen des Kragens;
- Fig. 4a, b: eine schematische Darstellung eines Ausschnitts aus einer Fassade mit erfindungsgemäss sanierten Abdeckplatten.

Grundsätzlich sind in den Figuren gleiche Teile mit gleichen Bezugszeichen versehen.

### Wege zur Ausführung der Erfindung

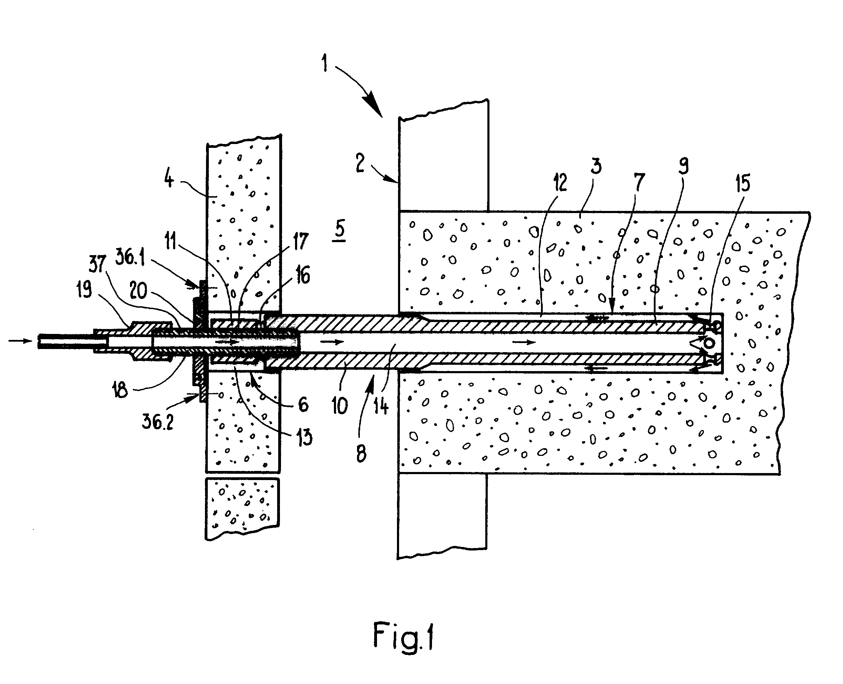

Fig. 1 zeigt eine Verankerungsvorrichtung im Montagezustand und zwar vor dem Einspritzen der Mörtelmasse. Andeutungsweise ist ein Baukörper 1, nämlich dessen Aussenwand 2 und Betondecke 3 gezeigt. Vor der Aussenwand 2 befindet sich eine Abdeckplatte 4, welche z B. von irgendwelchen bekannten (in der Figur nicht dargestellten) Schrägankern und Abstandselementen in einem gegebenen Abstand (von typischerweise mehreren Zentimetern) zur Aussenwand 2 gehalten ist. Hinter der Abdeckplatte 4 wird also ein Zwischenraum 5 gebildet, in welchem Luft zirkulieren kann. Es ist dabei zu beachten, dass der Zwischenraum 5 nicht zugänglich ist, da die Abdeckplatte 4 in aller Regel nicht entfernt werden kann.

Im Rahmen einer Sanierung geht es nun darum, die Abdeckplatten mit möglichst geringem Aufwand gegen (weitere) Absenkungen zu sichern. Gemäss der Erfindung werden deshalb an ausgewählten Stellen die im folgenden beschriebenen Verankerungsvorrichtungen angebracht.

Im vorliegenden Beispiel wird von aussen ein Loch in die Abdeckplatte 4 (vgl. Bohrung 6) und die dahinter liegende Betondecke 3 (vgl. Bohrung 7) gebohrt. (Es wird also bewusst eine Stelle angebohrt, an welcher sich ein baustatisch sehr tragfähiger Bauteil, z. B. die genannte Betondecke 3 befindet.)

In die durchgehende Bohrung 6 und die sacklochartige Bohrung 7 wird ein rohrförmiges Ankerelement 8 eingeschoben. Dieses verfügt über einen Verankerungsabschnitt 9, einen Kopf 11 und einen dazwischen angeordneten Schulterbereich 10. Der Durchmesser der Bohrungen 6, 7 ist an den Querschnitt des Schulterbereiches 10 (unter Wahrung eines kleinen Spiels, das zum Einschieben des Ankerelements 8 ausreicht) angepasst. Sowohl der Kopf 11 als auch der Verankerungsabschnitt 9 haben einen gegenüber dem Schulterbereich 10 reduzierten Querschnitt.

Die Länge des Schulterbereiches 10 ist so gewählt, dass dieser im Montagezustand, wie er in Fig. 1 dargestellt ist, den Zwischenraum 5 überbrücken kann und sowohl in die Bohrung 6 als auch in die Bohrung 7 geringfügig hineinragt (z. B. einige Millimeter). Beide Bohrungen 6 und 7 werden also durch den Schulterbereich 10 gegen den Zwischenraum 5 hin abgeschlossen. Dadurch dass der Verankerungsabschnitt 9 bzw. der Kopf 11 einen kleineren Durchmesser als der Schulterbereich 10 und folglich die entsprechende Bohrung 7 bzw. 6 hat, entsteht jeweils ein (ringförmiger) Freiraum 12 bzw. 13, den es mit Mörtel auszufüllen gilt.

Im vorliegenden Beispiel beansprucht der Verankerungsabschnitt 9 etwa die halbe Länge des Ankerelements 8, der Schulterbereich 10 etwa einen Drittel und der Kopf 11 etwa einen Zehntel der Länge. Der Durchmesser des Verankerungsabschnittes 9 ist z. B. 3 - 10 mm kleiner als derjenige des Schulterbereiches. Dasselbe gilt für den Kopf 11. Verankerungsabschnitt 9, Schulterbereich 10 und Kopf 11 sind im wesentlichen zylindrisch. Nur in den Übergangsbereichen dazwischen ändert sich der Querschnitt (stufenartig oder konisch).

Um die Freiräume 12, 13 im Sinn einer bevorzugten Ausführungsform der Erfindung durch das Ankerelement 8 hindurch mit Mörtelmasse auffüllen zu können, ist ein durchgehender Längskanal 14 vorgesehen, welcher einerseits im Verankerungsabschnitt 9 und andererseits im Bereich des Kopfes 11 radiale Mündungen 15 bzw. radiale Ausgänge 16 aufweist.

Bei der gezeigten Ausführungsform sind die Mündungen 15 am hinteren Ende des Ankerelements 8 angeordnet. Sie können aber ohne weiteres auch an einer anderen Stelle vorgesehen sein. Sie können auch weggelassen werden, wenn der Längskanal 14 an der hinteren Stirnseite des Ankerelements 8 mündet. (Im letztgenannten Fall ist bei der Montage allerdings darauf zu achten, dass die hintere Stirnseite einen ausreichenden Abstand zum Ende der Bohrung 7 hat, so dass die Mörtelmasse aus dem Längskanal 14 in den Freiraum 12 fliessen kann.)

Die radialen Ausgänge 16 befinden sich vorzugsweise im Übergangsbereich zwischen Kopf 11 und Schulterbereich 10. Im vorliegenden Beispiel ist an dieser Stelle zudem eine ringförmig umlaufende Einschnürung vorhanden. In der gezeigten Ausführungsform sind vier radiale Ausgänge 16 mit einem Durchmesser von z. B. 2 mm gleichmässig entlang des Umfangs verteilt.

Im Bereich des Kopfes 11 hat der Längskanal 14 ein Schraubgewinde 17, um einen rohrförmigen Adapter 18 einschrauben zu können. Die Länge des Adapters 18 ist jedenfalls grösser als der Abstand der Ausgänge 16 von der Stirnseite des Kopfes 11, da er bei Bedarf in der Lage sein muss, die Ausgänge 16 zu versperren, wobei er noch so weit aus der Bohrung 6 herausragen muss, dass ein Kupplungsstück 19 (einer nicht dargestellten Einspritzpumpe) angesetzt werden kann.

Auf dem Adapter 18 sitzt eine Montageplatte 20, welche - nach dem Einführen des Ankerelements 8 in die Bohrungen 6, 7 - auf der Aussenseite der Abdeckplatte 4 (z. B. mit Spreizkeilen 36.1, 36.2) befestigt wird. Sie schliesst die Bohrung 6 nach aussen ab. Dadurch dass der Adapter 18 über ein Schraubgewinde 37 mit der Montageplatte 20 verbunden ist, ergibt sich die Möglichkeit, die Position des Ankerelements 8 in den Bohrungen 6, 7 in axialer Richtung zu justieren. Auf diese Weise können kleine Variationen bei der Dicke der Abdeckplatte 4 oder der Grösse des Zwischenraumes 5 aufgefangen bzw. kompensiert werden.

Ist das Ankerelement 8 in der korrekten Stellung positioniert und befindet sich der Adapter 18 in einer Einschraubtiefe, in welcher er die radialen Ausgänge 16 versperrt, dann kann mit dem Einspritzen der Mörtelmasse begonnen werden. Diese wird durch den Längskanal 14 zum hinteren Ende des Ankerelements 8 und von dort via Mündungen 15 in den Freiraum 12 gepresst. Ist der Freiraum 12 aufgefüllt (was z. B. durch einen Druckanstieg am Ausgang der Pumpe oder durch eine Messung des eingespritzten Volumens festgestellt werden kann), wird der Adapter 18 so weit zurückgeschraubt, dass die radialen Ausgänge 16 freigegeben werden. Nun kann die Mörtelmasse auch in den Freiraum 13 gelangen. Ist auch dieser aufgefüllt, kann der Adapter 18 herausgenommen und nach Wunsch durch eine Verschlusskappe mit ästhetischem Effekt ersetzt werden. Gewünschtenfalls kann in das Schraubgewinde 17 eine massive Schraube eingesetzt werden, welche (zusammen mit der Montageplatte 20) sicherstellt, dass die Abdeckplatte 4 bei Windlast nicht vom Ankerelement 8 losgerissen werden kann. Es ist natürlich auch möglich, die Montageplatte 20 zu entfernen bzw. durch eine gefällige Abdeckung der sanierten Stelle zu ersetzen.

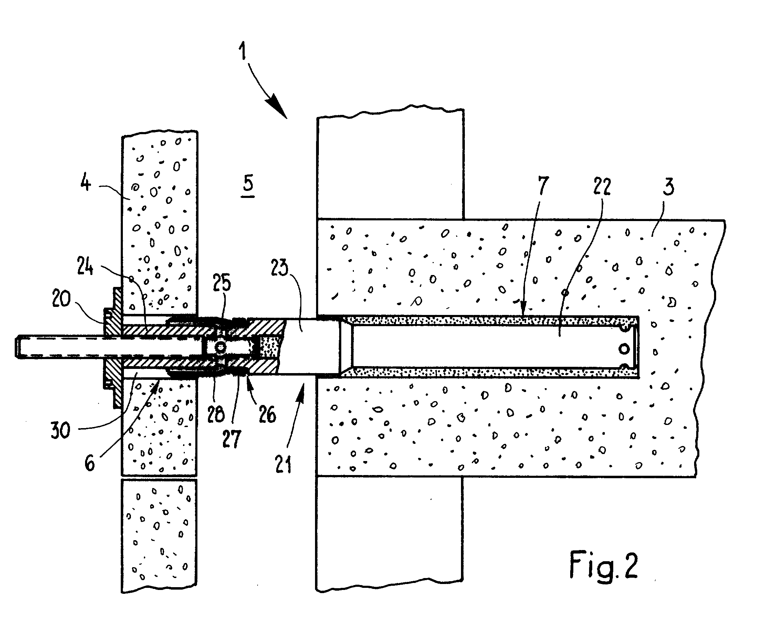

Das in Fig. 2 gezeigte Ankerelement 21 verfügt über zusätzliche Merkmale, welche dafür sorgen, dass die Abdeckplatte 4 auch bei starker Windlast nicht gegen das Bauwerk 1 gedrückt werden kann. Der Verankerungsabschnitt 22 ist genau gleich wie in Fig. 1 ausgeführt. Auch der Übergang zwischen diesem und dem Schulterbereich 23 befindet sich am selben Ort.

Unterschiedlich ist dagegen der Übergang zwischen Kopf 24 und Schulterbereich 23. Zunächst ist festzustellen, dass der Kopf 24 länger und der Schulterbereich 23 kürzer geworden ist, d. h. sie sind etwa gleich lang (z. B. je 20 - 25% der Gesamtlänge des Ankerelements 21). Sowohl die am Übergang zwischen Schulterbereich 23 und Kopf 24 gebildete Stufe 26 als auch die Ausgänge 25 kommen im Montagezustand (wie er in Fig. 2 gezeigt ist) in den Zwischenraum 5 zu liegen. Mit anderem Worten: Der Schulterbereich 23 erstreckt sich nicht bis in die Bohrung 6.

Mit einem Haltering 27 (welcher unmittelbar an die Stufe 26 anschliesst) wird eine schlauchartige, flexible Hülle 28 festgehalten. Diese Hülle 28 erstreckt sich bei der Stufe 26 beginnend über die Ausgänge 25 hinweg bis in denjenigen Bereich des Kopfes 24, welcher im Montagezustand in der Bohrung 6 liegt. Sie ist z. B. mindestens halb so lang wie der Kopf 24.

Der Aussendurchmesser des Halterings 27 darf nicht grösser sein als derjenige des Schulterbereiches 23.

Das Einführen und Fixieren des Ankerelements 21 erfolgt im Prinzip in derselben Weise wie beim Ausführungsbeispiel gemäss Fig. 1. Auch das Einspritzen erfolgt in zwei Teilschritten. Zu beachten ist nun aber der zweite Teilschritt:

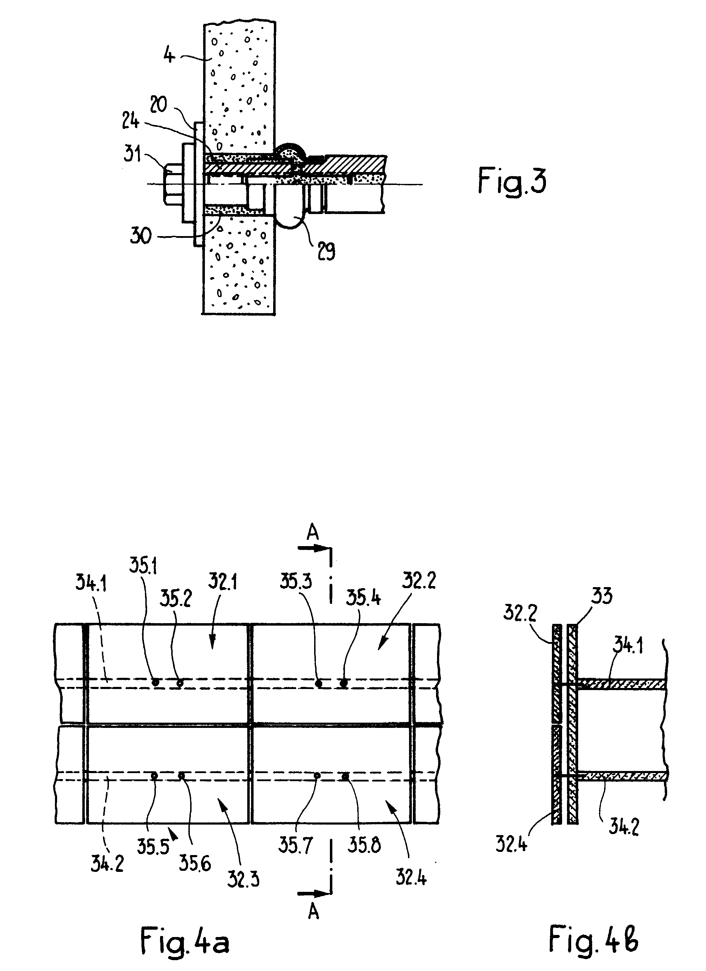

Wenn die Mörtelmasse aus dem Ausgängen 25 herausquillt, trifft sie auf die flexible Hülle 28. Diese wird sich nun unter dem Druck der Einspritzung radial ausdehnen bzw. aufbauschen und im Zwischenraum 5 einen Kragen 29 bilden, wie er in Fig. 3 darstellt ist.

Durch die in Fig. 3 ersichtliche Aufbauschung verkürzt sich die axiale Länge der Hülle 28. Es wird nun klar, dass die Hülle 28 in jedem Fall so lang sein muss, dass sie sich bei der Kragenbildung nicht aus der Bohrung 6 herausziehen kann. Ist die Dehnungsfähigkeit der Hülle 28 erschöpft, fliesst die Mörtelmasse auch in den Freiraum 30 hinein.

Im fertig montierten Zustand wird die Abdeckplatte 4 zwischen Kragen 29 und Montageplatte 20 (welche durch eine massive Schraube 31 mit dem Kopf 24 verbunden ist) so festgehalten, dass sie ihren Abstand zum Baukörper 1 nicht ändern kann.

Fig. 4a, 4b zeigen ausschnittsweise eine sanierte Gebäudefassade in der Draufsicht und im Querschnitt (vgl. Schnitt A-A). Es sind mehrere regelmässig angeordnete Abdeckplatten 32.1, ...,32.4 dargestellt, welche je durch zwei Verankerungsvorrichtungen 35.1, ...,35.8 im entsprechenden, dahinterliegenden Betonboden 34.1, 34.2 verankert sind. Die zwei Verankerungsvorrichtungen 35.1 und 35.2, ...,35.7 und 35.8 sind gemäss einer besonders bevorzugten Ausführungsform in der Mitte der jeweiligen Abdeckplatte 32.1, ...,32.4 und in einem möglichst geringen Abstand nebeneinander angeordnet. Die genannte Distanz der Verankerungsvorrichtungen ist so gewählt, dass die unterschiedliche thermische Ausdehnung von Abdeckplatte und Betonboden keine bzw. keine nennenswerte Scherbelastung der Ankerelemente nach sich zieht.

Erforderlichenfalls können die Abdeckplatten an den Ecken bzw. den Rändern durch gewöhnliche Spreizkeile zusätzlich in der Wand 33 fixiert werden, um ein Verkippen der Abdeckplatten zu verhindern.

Die Erfindung ist offensichtlich nicht auf die beschriebenen Ausführungsbeispiele beschränkt. Die Länge der verschiedenen Teile des Ankerelements ist auf die Gegebenheiten der Anwendung abzustimmen. Dasselbe gilt für deren Querschnitte. Der Längskanal hat mit Vorteil einen in Achsenlängsrichtung konstanten Querschnitt. Es ändert sich somit die Wandstärke des rohrförmigen Ankerelements.

Das erfindungsgemässe Ankerelement lässt sich relativ kostengünstig aus einem Rohr drehen. Es ist allerdings nicht zwingend, dass das Ankerelement aus einem Guss ist.

Sowohl am Kopf als auch am Verankerungsabschnitt können gewünschtenfalls Längsoder Querrippen ausgebildet sein. Die Ausgänge bzw. Mündungen sind so anzuordnen, dass der Freiraum zwischen den Rippen problemlos ausgefüllt werden kann. Sie können gewünschtenfalls über die Länge des Kopfes bzw. des Verankerungsabschnittes verteilt werden.

Der Adapter braucht nicht unbedingt in zwei verschiedenen axialen Positionen eingestellt zu werden. Es ist z. B. denkbar, dass der Adapter selbst radiale Bohrungen oder Schlitze hat, die durch Drehen des Adapters wahlweise in eine mit den radialen Ausgängen des Kopfes fluchtende Stellung gebracht werden können. D. h. der Adapter funktioniert wie ein Hahn, der durch Drehen geöffnet und geschlossen werden kann.

Zusammenfassend ist festzustellen, dass durch die Erfindung ein einfaches Verfahren zum Fixieren von Abdeckplatten vor einer Wand geschaffen worden ist. Die kostengünstig herstellbare Verankerungsvorrichtung und die Möglichkeit zum Einspritzen von Mörtelmasse via Ankerelement hat entsprechende Vorteile namentlich bei der Sanierung von Gebäudefassaden.

## Patentansprüche

1. Verankerungsvorrichtung zum Abstützen einer Abdeckplatte (4) in einem Abstand zu einem statisch tragfähigen Baukörper (1), mit einem Ankerelement (8), welches einen Verankerungsabschnitt (9) zum Verankern im Baukörper (1) und einen Kopf (11) zur Fixierung der Abdeckplatte (4) aufweist, wobei der Kopf (11) einen gegenüber einem benachbarten Schulterbereich (10) reduzierten Querschnitt hat.

2. Verankerungsvorrichtung nach Anspruch 1, dadurch gekennzeichnet, dass das Ankerelement (8) einen stirnseitig des Kopfes (11) mündenden Längskanal (14) hat, welcher im Bereich des Kopfes (11) radiale Ausgänge (16) aufweist, so dass eine fliessfähige Mörtelmasse durch den Längskanal (14) eingespritzt werden kann.

3. Verankerungsvorrichtung nach Anspruch 2, dadurch gekennzeichnet, dass sich der Längskanal (14) bis in den Verankerungsabschnitt (9), vorzugsweise über die ganze Länge des Ankerelements (8) erstreckt und dort Mündungen (15) hat, so dass fliessfähige Mörtelmasse vom Kopf (11) her - zwecks Fixierung des Verankerungsabschnittes (9) im Bauwerk (1) - eingespritzt werden kann.

4. Verankerungsvorrichtung nach einem der Ansprüche 2 oder 3, dadurch gekennzeichnet, dass der Längskanal (14) im Bereich des Kopfes (11) über Mittel zum Einsetzen eines Adapters (18) verfügt, welche so ausgebildet sind, dass der Adapter (18) wahlweise in einer ersten, die Ausgänge (16) versperrenden und in einer zweiten, die Ausgänge (16) offen lassenden Stellung eingesetzt werden kann.

5. Verankerungsvorrichtung nach einem der Ansprüche 2 bis 4, dadurch gekennzeichnet, dass zwischen Kopf (11) und Schulterbereich (10) eine flexible Auffanghülle (28) vorgesehen ist, welche die Ausgänge (16) überdeckt, so dass sie sich beim Einspritzen der Mörtelmasse auffüllen kann, um an einer Rückseite der Abdeckplatte 4 einen Kragen (29) zu bilden.

6. Verankerungsvorrichtung nach Anspruch 4 oder 5, dadurch gekennzeichnet, dass sie über einen Adapter (18) verfügt, welcher stirnseitig des Kopfes (11) in den Längskanal (14) eingesetzt werden kann und welcher durch eine Montagehilfe (20) aussenseitig auf der Abdeckplatte (4) für Montagezwecke fixiert werden kann.

7. Verankerungsvorrichtung nach Anspruch 6, dadurch gekennzeichnet, dass der Adapter (18) justierbar in der Montagehilfe (20) fixiert werden kann.

8. Verfahren zum Verankern einer Abdeckplatte (4) in einem Abstand zu einem Baukörper (1), insbesondere zum Sanieren einer Gebäudefassade, unter Verwendung einer Verankerungsvorrichtung nach einem der Ansprüche 1 bis 7, dadurch gekennzeichnet, dass
a) an einer statisch tragfähigen Stelle des Baukörpers (1) von aussen durch die Abdeckplatte (4) hindurch eine Bohrung (6, 7) im Baukörper angebracht wird, dass
b) ein Ankerelement (8), dessen Schulterbereich (10) an den Querschnitt der Bohrung (6, 7) angepasst ist, eingesetzt und in der für die Zwecke der Montage erforderlichen Weise fixiert wird, und dass
c) über den Längskanal (14) Mörtelmasse eingespritzt wird, um das Ankerelement (8) in der Bohrung (6) einzuzementieren.

9. Verfahren nach Anspruch 8, dadurch gekennzeichnet, dass die Mörtelmasse in zwei Teilschritten eingespritzt wird, wobei im ersten Teilschritt, in welchem sich der Adapter (18) in einer ersten Stellung befindet, in welcher die Ausgänge (16) versperrt sind, das zum Einzementieren des Verankerungsabschnittes (9) erforderliche Volumen der Mörtelmasse eingespritzt wird, und im zweiten Teilschritt, in welchem sich der Adapter (18) in einer zweiten Stellung befindet, in welcher die Ausgänge (16) offen sind, das zum Einzementieren des Kopfes (11) erforderliche Volumen der Mörtelmasse eingespritzt wird.

10. Verfahren nach Anspruch 8 oder 9, dadurch gekennzeichnet, dass zum Verankern einer Abdeckplatte (4) zwei Verankerungsvorrichtungen in einem im Verhältnis zur Abmessung der Abdeckplatte (4) kleinen gegenseitigen Abstand angebracht werden.

11. Gebäudefassade, bei welcher Abdeckplatten (32.1, ... 32.4) in einem gegebenen Abstand zum Baukörper (1) gehalten und durch mindestens eine Verankerungsvorrichtung nach einem der Ansprüche 1 bis 7 verankert sind.

12. Gebäudefassade nach Anspruch 11, dadurch gekennzeichnet, dass genau zwei Verankerungsvorrichtungen (35.1, 35.2, ...) pro Abdeckplatte (32.1, ... 32.4) vorgesehen sind, welche in einem im Verhältnis zur Abmessung der Abdeckplatte (4) kleinen gegenseitigen Abstand angebracht sind zur Minimierung von durch thermische Ausdehnung von Abdeckplatte einerseits und Baukörper (1) andererseits bedingten Belastungen.
